# EUROPEAN PATENT APPLICATION

(11) **EP 4 583 285 A1**
(43) Date of publication of application: **09.07.2025**
(21) Application number: 22959007.0
(22) Date of filing: 20.09.2022
(51) Int. Cl.: H01M 50/284, H01M 50/249, H01M 50/20

(54) **BATTERY AND ELECTRIC DEVICE**

(71) Applicant: Contemporary Amperex Technology Co., Limited, Ningde, Fujian 352100 (CN)
(72) Inventor: LIU, Ruidi, Ningde, Fujian 352100 (CN); WU, Youxin, Ningde, Fujian 352100 (CN); WANG, Zengzhong, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2022/119797
(87) International publication number: WO 2024/059995

(57) **Abstract**

The present application provides a battery and an electrical apparatus. The battery comprises a box, a battery cell, and an electrical element. The box has a first accommodating cavity and a second accommodating cavity that are isolated from each other. The battery cell is accommodated within the first accommodating cavity. The electrical element is accommodated within the second accommodating cavity and electrically connected to the battery cell. The box further has an access port and an access cover, the access port communicates the second accommodating cavity with the outside of the housing, and the access cover covers the access port. With the battery provided in the embodiments of the present application, during inspection of the electrical element, since the first accommodating cavity and the second accommodating cavity are isolated from each other, the first accommodating cavity can still maintain good sealing performance, and impurities such as the outside air can hardly enter the first accommodating cavity through the access port and the second accommodating cavity, thereby no corrosion of the battery cell within the first accommodating cavity is caused, which is conductive to improving the safety performance of the battery.

## Description

### TECHNICAL FIELD

The present application relates to the technical field of batteries, and more specifically relates to a battery and an electrical apparatus.

### BACKGROUND

Batteries are widely used in electronic devices, such as a mobile phone, a laptop, a battery cart, an electric vehicle, an electric plane, an electric ship, an electric toy car, an electric toy ship, an electric toy plane, and an electric tool. Battery cells may include, e.g., cadmium-nickel battery cells, nickel-hydrogen battery cells, lithium-ion battery cells, and secondary alkaline zinc-manganese battery cells.

In the development of battery technologies, in addition to improving service performance of batteries, how to improve safety performance of the batteries is also an unnegligible issue. Therefore, how to improve the safety performance of the batteries is a technical issue to be continuously improved in the battery technologies.

### SUMMARY OF THE INVENTION

The present application provides a battery and an electrical apparatus, which can improve safety performance of the battery.

In a first aspect, the battery provided in an embodiment of the present application comprises a box, a battery cell, and an electrical element; wherein the box has a first accommodating cavity and a second accommodating cavity that are isolated from each other; the battery cell is accommodated within the first accommodating cavity; and the electrical element is accommodated within the second accommodating cavity and electrically connected to the battery cell; wherein the box further has an access port and an access cover, the access port communicates the second accommodating cavity with outside of the box, and the access cover covers the access port.

In the battery provided in an embodiment of the present application, the first accommodating cavity and the second accommodating cavity are arranged to be isolated from each other, the battery cell is accommodated within the first accommodating cavity, and the electrical element is accommodated within the second accommodating cavity. The access port of the box communicates the second accommodating cavity with the outside of the box, and the access cover covers the access port. During inspection of the electrical element within the second accommodating cavity, the access cover is opened for inspection of the electrical element through the access port. During the inspection, since the first accommodating cavity and the second accommodating cavity are isolated from each other, the first accommodating cavity can still maintain good sealing performance, and impurities such as outside air can hardly enter the first accommodating cavity through the access port and the second accommodating cavity, thereby reducing corrosion of the battery cell within the first accommodating cavity, which is conductive to improving the safety performance of the battery.

In some embodiments, the battery further comprises a battery management system unit, wherein the battery management system unit is accommodated within the second accommodating cavity, is electrically connected to the battery cell, and is configured to exchange information with the battery cell. An operation, such as inspection or repair, also needs to be performed on the battery management system unit in a timely manner. By integrating the battery management system unit into the second accommodating cavity, the sealing of the first accommodating cavity can still be maintained during the operation, such as inspection or repair, on the battery management system unit, thereby reducing the possibility that impurities such as water and dust in the outside air enter the first accommodating cavity and corrode the battery cell, and further improving work safety of the battery.

In some embodiments, the electrical element comprises at least one of a relay, a fuse, and a sensor. In this way, the electrical element can be configured with relevant components as needed to ensure normal operation of the electrical element.

In some embodiments, the box comprises a first box body portion and a second box body portion, the first box body portion covers the second box body portion along a first direction to form the first accommodating cavity and the second accommodating cavity; and the second accommodating cavity is located on one side of the first accommodating cavity along a second direction, and is arranged in parallel with the first accommodating cavity, and the first direction intersects with the second direction. In this way, the first accommodating cavity accommodates more battery cells, and is conducive to rational arrangement of the shape of the battery and its position in the electrical apparatus as needed.

In some embodiments, the box comprises a first box body portion and a second box body portion, the first box body portion covers the second box body portion along a first direction to form the first accommodating cavity and the second accommodating cavity; and the second accommodating cavity is located at an end of the box along a second direction and a third direction, and the first direction, the second direction, and the third direction intersect pairwise. The second accommodating cavity is arranged at the end of the first accommodating cavity along the second direction and the third direction, the size of the second accommodating cavity can be rationally distributed along the second direction and the third direction respectively based on the volume of the electrical element within the second accommodating cavity, and the first accommodating cavity and the second accommodating cavity have appropriate sizes at corresponding positions, so that the first accommodating cavity accommodates more battery cells by rational use of the space of the first accommodating cavity, which is thus conductive to improving the energy density of the battery.

In some embodiments, the box comprises a first box body portion and a second box body portion, the first box body portion covers the second box body portion along a first direction to form the first accommodating cavity and the second accommodating cavity; and the second accommodating cavity is located on one side of the first accommodating cavity along the first direction, an orthographic projection of the second accommodating cavity along the first direction is located within an orthographic projection of the first accommodating cavity along the first direction, and the first direction intersects with the second direction. The first accommodating cavity can be regularly arranged along the second direction and the third direction, and the presence of the second accommodating cavity will not affect the shape and size of the first accommodating cavity along the second direction and the third direction. In this way, the size and shape of the first accommodating cavity can be rationally arranged as needed.

In some embodiments, the box has a partition configured to isolate the first accommodating cavity from the second accommodating cavity; and the battery further comprises a first connecting terminal arranged on the partition for electrically connecting battery cell to the electrical element. In this way, it is conductive to electrical connection between the battery cell within the first accommodating cavity and the electrical element within the second accommodating cavity on the premise that the first accommodating cavity and the second accommodating cavity are isolated from each other.

In some embodiments, the battery further comprises a battery management system unit, wherein the battery management system unit is accommodated within the second accommodating cavity, is electrically connected to the battery cell, and is configured to exchange information with the battery cell; and the battery further comprises a second connecting terminal arranged on the partition for electrically connecting the battery cell to the battery management system unit. In this way, it is conductive to electrical connection between the battery cell within the first accommodating cavity and the battery management system unit within the second accommodating cavity on the premise that the first accommodating cavity and the second accommodating cavity are isolated from each other.

In a second aspect, an embodiment of the present application provides an electrical apparatus, comprising the battery according to any one embodiment in the first aspect, wherein the battery is configured to provide electrical energy.

Because of using the battery provided in an embodiment of the present application, the electrical apparatus provided according to an embodiment of the present application has same technical effects, and will not be repeated here.

In some embodiments, the electrical apparatus comprises a compartment, the second accommodating cavity is located below the compartment along a gravity direction, and the access cover is adjacent to the compartment and is arranged towards one side of the compartment. In this way, it is convenient for an operator to operate, within the compartment, the electrical element within the second accommodating cavity, and is conducive to reducing the difficulty in the inspection of the electrical element within the second accommodating cavity.

In some embodiments, the second accommodating cavity is located between the compartment and the first accommodating cavity along the gravity direction, which is conducive to arranging the first accommodating cavity and the second accommodating cavity by rational use of the space of the electrical apparatus along the gravity direction, thereby improving the compactness of each structure within the electrical apparatus.

In some embodiments, at least a part of the second accommodating cavity is located inside the compartment. In this way, the space failing to be used inside the compartment can be used to accommodate at least a part of the second accommodating space, thereby conveniently opening the access cover within the compartment while improving the space utilization rate within the compartment, and inspecting the electrical element within the second accommodating cavity, that is, improving the convenience of inspecting the electrical element within the second accommodating space.

In some embodiments, the electrical apparatus comprises a movable member, wherein the movable member is located above the second accommodating cavity, is arranged to cover the access cover, and is movably installed in the compartment. When the electrical element is inspected, the electrical element can be conveniently inspected by moving the movable member. In this way, it is conducive to further improving the convenience of the inspection operation on the electrical element within the second accommodating cavity.

In some embodiments, the movable member comprises a seat movably installed in the compartment. In this way, the space under the seat can be used to accommodate at least a part of the second accommodating cavity, which is conducive to rational use of the space within the compartment. Moreover, the repair operation on the electrical element can be conveniently performed, when necessary, by removing the seat, which is conducive to improving the convenience of the repair operation on the electrical element.

In some embodiments, the compartment comprises a cab, and the seat is installed within the cab. In this way, it is convenient to rationally configure positions of the battery and the second accommodating cavity according to the arrangement of the battery in the vehicle while ensuring the convenience of repair of the electrical element within the second accommodating cavity.

### BRIEF DESCRIPTION OF DRAWINGS

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to the drawings without any creative efforts.
FIG. 1 is a schematic structural diagram of a vehicle provided in an embodiment of the present application;
FIG. 2 is a schematic exploded diagram of a battery provided in an embodiment of the present application with some mechanisms omitted;
FIG. 3 is a schematic structural diagram of a battery module in a battery provided in an embodiment of the present application;
FIG. 4 is a schematic exploded diagram of a battery cell in a battery provided in an embodiment of the present application;
FIG. 5 is a schematic structural diagram of a battery provided in an embodiment of the present application;
FIG. 6 is a schematic exploded structural diagram of a battery provided in an embodiment of the present application;
FIG. 7 is a schematic exploded structural diagram of another battery provided in an embodiment of the present application;
FIG. 8 is a schematic structural diagram of a battery provided in an embodiment of the present application;
FIG. 9 is a schematic structural diagram of another battery provided in an embodiment of the present application;
FIG. 10 is a schematic structural diagram of still another battery provided in an embodiment of the present application;
FIG. 11 is a schematic structural diagram of an electrical apparatus provided in an embodiment of the present application with a part of structure omitted; and
FIG. 12 is another schematic structural diagram of an electrical apparatus provided in an embodiment of the present application with a part of structure omitted.

In the drawings, the figures are not drawn to the actual scale.

### Description of reference numerals:

1. vehicle; 1a. motor; 1b. controller;
10. battery; 11. box; 11a. first accommodating cavity; 11b. second accommodating cavity; 11c. access port; 111. first box body portion; 112. second box body portion; 113. access cover; 114. partition;
20. battery module;
30. battery cell; 31. shell; 311. case; 311a. opening; 312. end cover; 32. electrode assembly;
40. electrical element;
50. battery management system unit;
61. first connecting terminal; 62. second connecting terminal;
70. compartment; 71. cab;
80. movable member; 81. seat;
X. first direction; Y. second direction; Z. third direction; G. gravity direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the drawings are intended to cover non-exclusive inclusions. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relationship for describing associated objects, indicating that three relationships may exist. For example, C and/or D may represent three situations: C exists alone, both C and D exist, and D exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "plurality of" means more than two (including two).

In the present application, the battery cell may comprise, e.g., a lithium-ion secondary battery cell, a lithium-ion primary battery cell, a lithium-sulfur battery cell, or a sodium/lithium-ion battery cell, a sodium-ion battery cell, or a magnesium-ion battery cell, which is not limited in the embodiments of the present application. The battery cell may be, e.g., a cylinder, a flat body, a cuboid, or other shape, which is not limited in the embodiments of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can prevent liquid or other foreign matters from affecting charging or discharging of the battery cell.

The battery cell comprises an electrode assembly and an electrolyte solution, and the electrode assembly comprises a positive electrode plate, a negative electrode plate, and a spacer. The battery cell works mainly relying on movement of metal ions between the positive electrode plate and the negative electrode plate. The positive electrode plate comprises a positive electrode current collector and a positive electrode active material layer, the positive electrode active material layer is coated on a surface of the positive electrode current collector; the positive electrode current collector comprises a positive electrode current collecting assembly and a positive electrode protrusion protruding from the positive electrode current collecting assembly, the positive electrode current collecting assembly is coated with the positive electrode active material layer, at least a part of the positive electrode protrusion is not coated with the positive electrode active material layer, and the positive electrode protrusion serves as a positive tab. Taking a lithium-ion battery as an example, the material of the positive electrode current collector may be aluminum, and the positive electrode active material layer comprises a positive electrode active material, which may be, e.g., lithium cobalt oxide, lithium iron phosphate, ternary lithium, or lithium manganate. The negative electrode plate comprises a negative electrode current collector and a negative electrode active material layer, the negative electrode active material layer is coated on a surface of the negative electrode current collector; the negative electrode current collector comprises a negative electrode current collecting assembly and a negative electrode protrusion protruding from the negative electrode current collecting assembly, the negative electrode current collecting assembly is coated with the negative electrode active material layer, at least a part of the negative electrode protrusion is not coated with the negative electrode active material layer, and the negative electrode protrusion serves as a negative tab. The material of the negative electrode current collector may be copper, and the negative electrode active material layer comprises a negative electrode active material, which may be, e.g., carbon or silicon. In order to ensure that a large current passes without fusing, the number of positive tabs is a plural number, and the positive tabs are stacked together; and the number of negative tabs is a plural number, and the negative tabs are stacked together. The material of the spacer may be, e.g., PP (polypropylene) or PE (polyethylene). In addition, the electrode assembly may be a winded structure or a stacked structure, which is not limited in the embodiments of the present application.

The battery has a distribution box with an electrical element therein. The electrical element usually comprises a component, such as a relay, a fuse, a current sensor, or a precharged resistor. The battery is connected to an electrical apparatus through the distribution box to rationally distribute electrical energy of the battery to various electrical devices of the electrical apparatus, such as a motor controller, a vehicle heater, and an air conditioning compressor. When the battery is working, the electrical element within the distribution box tends to fail, and the electrical element within the distribution box needs to be inspected in a timely manner.

The inventors found that during inspection of the distribution box of the battery, at least a part of the battery cell within the battery will be exposed to air, and water and oxygen in the air will come into contact with the battery cell and connecting components thereof. With the increase of the number and time of battery power distributions and inspections, the battery cell and the connecting components thereof contact with, e.g., water and oxygen in the air for a long time, which tends to cause problems such as corrosion and even failure of the battery cell and the connecting components thereof, and seriously affects the safety performance of the battery.

Based on the above problems discovered by the inventors, the inventors have improved the structure of the battery. The technical solutions described in the embodiments of the present application are applicable to a battery cell, a battery comprising the battery cell, and an electrical apparatus using the battery.

The battery provided according to an embodiment of the present application comprises a box, a battery cell, and an electrical element. The box has a first accommodating cavity and a second accommodating cavity that are isolated from each other, and the battery cell is accommodated within the first accommodating cavity. The electrical element is accommodated within the second accommodating cavity, and is electrically connected to the battery cell. The box further has an access port and an access cover. The access port communicates the second accommodating cavity with outside of the box, and the access cover covers the access port.

In the battery provided in an embodiment of the present application, the first accommodating cavity and the second accommodating cavity are arranged to be isolated from each other, the battery cell is accommodated within the first accommodating cavity, and the electrical element is accommodated within the second accommodating cavity. The access port of the box communicates the second accommodating cavity with the outside of the box, and the access cover covers the access port. During inspection of the electrical element within the second accommodating cavity, the access cover is opened for inspection of the electrical element through the access port. During the inspection, since the first accommodating cavity and the second accommodating cavity are isolated from each other, the first accommodating cavity can still maintain good sealing performance, and impurities such as outside air can hardly enter the first accommodating cavity through the access port and the second accommodating cavity, thereby reducing the risk of corroding the battery cell within the first accommodating cavity, which is conductive to improving the safety performance of the battery.

The electrical apparatus may be, e.g., a vehicle, a mobile phone, a portable device, a laptop, a ship, a spacecraft, an electric toy, and an electric tool. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes a plane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. The electrical apparatus is not specially limited in the embodiments of the present application.

For ease of description, the following embodiments are illustrated when the electrical apparatus is, for example, a vehicle.

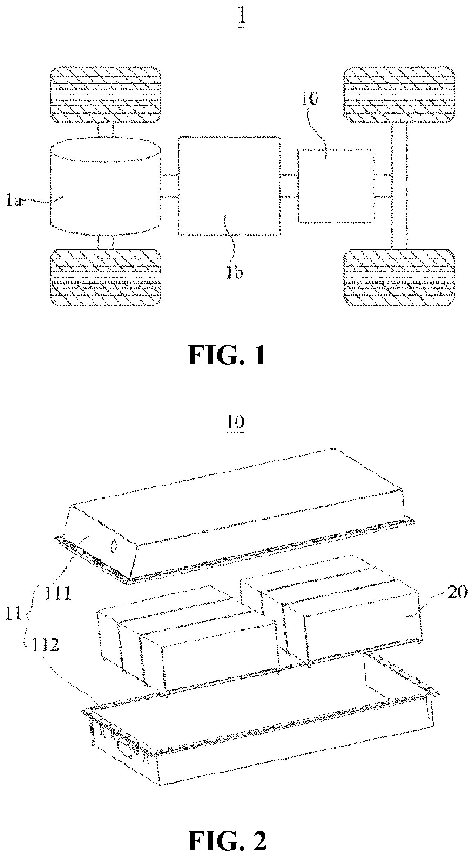

As shown in FIG. 1, a battery 10 is provided inside a vehicle 1. The battery 10 may be arranged at the bottom or head or tail of the vehicle 1. The battery 10 may be configured to power the vehicle 1, for example, the battery 10 may serve as an operating power source of the vehicle 1.

The vehicle 1 may further comprise a controller 1b and a motor 1a. The controller 1b is configured to control the battery 10 to power the motor 1a, for example, serve to satisfy operating power demand when the vehicle 1 is starting, navigating, and running.

In some embodiments of the present application, the battery 10 not only can serve as an operating power source of the vehicle 1, but also can serve as a driving power source of the vehicle 1, to provide a driving power for the vehicle 1 in place of or partially in place of fuel or natural gas.

As shown in FIG. 2, the battery 10 comprises a battery cell (not shown in FIG. 2). The battery 10 may further comprise a box configured to accommodate the battery cell.

The box 11 is configured to accommodate the battery cell, and the box 11 may have various structural forms. In some embodiments, the box 11 may comprise a first box body portion 111 and a second box body portion 112. The first box body portion 111 and the second box body portion 112 cover each other. The first box body portion 111 and the second box body portion 112 jointly define an accommodating space for accommodating the battery cell. The second box body portion 112 may have a hollow structure with one opening end, the first box body portion 111 is a platy structure, the first box body portion 111 covers the opening side of the second box body portion 112 to form a box 11 having an accommodating space; and the first box body portion 111 and the second box body portion 112 each may be a hollow structure with one opening side. The opening side of the first box body portion 111 covers the opening side of the second box body portion 112 to form the box 11 having the accommodating space. Of course, the first box body portion 111 and the second box body portion 112 may be various shapes, such as a cylinder or a cuboid.

In order to improve sealing performance of the connected first box body portion 111 and second box body portion 112, a sealing element, such as a sealant or a sealing ring, may be further arranged between the first box body portion 111 and the second box body portion 112.

Assuming that the first box body portion 111 covers the second box body portion 112, the first box body portion 111 may also be referred to as an upper box cover, and the second box body portion 112 may also be referred to as a lower box.

In the battery 10, there may be one battery cell, or there may be a plurality of battery cells. If there are a plurality of battery cells, there may be series connection, or parallel connection, or parallel-series connection among the plurality of battery cells. The parallel-series connection means that there is both series connection and parallel connection among the plurality of battery cells. The plurality of battery cells may be directly connected together by series connection or parallel connection or parallel-series connection, and then an entirety composed of the plurality of battery cells is accommodated within the box 11, or the plurality of battery cells may also be first connected by series connection or parallel connection or parallel-series connection to form a battery module 20. The plurality of battery modules 20 are then connected by series connection or parallel connection or parallel-series connection to form an entirety, which is accommodated within the box 11.

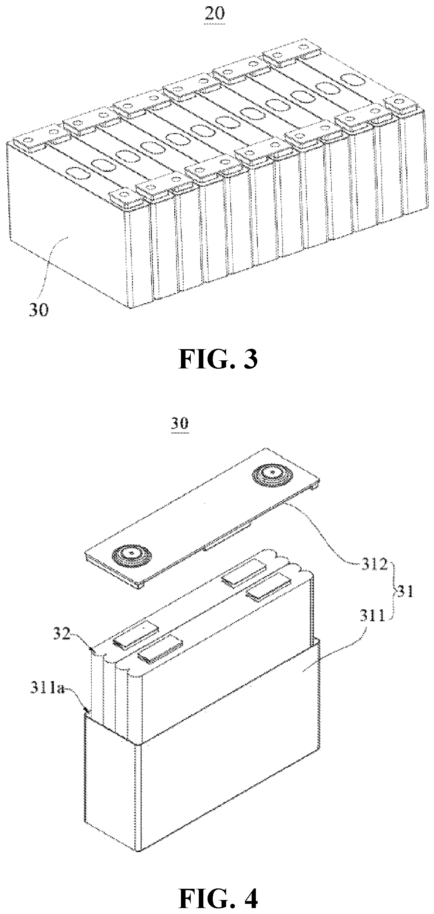

In some embodiments, as shown in FIG. 3, FIG. 3 is a schematic structural diagram of the battery module 20 shown in FIG. 2. In the battery module 20, there are a plurality of battery cells 30. The plurality of battery cells 30 are first connected by series connection or parallel connection or parallel-series connection to form a battery module 20. The plurality of battery modules 20 are then connected by series connection or parallel connection or parallel-series connection to form an entirety, which is accommodated within the box 11.

In some embodiments, the plurality of battery cells 30 in the battery module 20 may be electrically connected through a bus component, so that the plurality of battery cells 30 in the battery module 20 are connected by parallel connection or series connection or parallel-series connection.

Referring to FIG. 4, FIG. 4 is a schematic exploded diagram of the battery cell 30 shown in FIG. 3. The battery cell 30 provided in an embodiment of the present application comprises an electrode assembly 32 and a shell 31. The shell 31 has an accommodating cavity, and the electrode assembly 32 is accommodated within the accommodating cavity.

In some embodiments, the shell 31 may comprise a case 311 and an end cover 312. The case 311 is a hollow structure with an opening 311a on one side. The end cover 312 covers the opening 311a of the case 311 and forms a sealed connection to form a sealed space for accommodating the electrode assembly 32 and an electrolyte.

When the battery cell 30 is assembled, the electrode assembly 32 may be first placed into the case 311, then the end cover 312 covers the opening of the case 311, and then the electrolyte is injected into the case 311 through an electrolyte injection port on the end cover 312.

In some embodiments, the shell 31 may be further configured to accommodate an electrolyte, such as an electrolyte solution. The shell 31 may have various structural forms.

The case 311 may be in various shapes, such as a cylinder or a cuboid. The shape of the case 311 may be determined based on a specific shape of the electrode assembly 32. For example, if the electrode assembly 32 is a cylindrical structure, the case 311 may be selected to have a cylindrical structure. If the electrode assembly 32 is a cuboid structure, the case 311 may be selected to have a cuboid structure. In FIG. 4, as an example, the case 311 and the electrode assembly 32 are each a cuboid structure.

The case 311 may be made of a variety of materials, such as copper, iron, aluminum, stainless steel, or aluminum alloy, which is not particularly limited in the embodiments of the present application.

One or more electrode assemblies 32 may be accommodated within the case 311. In FIG. 4, two electrode assemblies 32 are accommodated within the case 311.

As shown in FIGS. 2, 5, and 6, the battery 10 provided according to the embodiments of the present application comprises a box 11, a battery cell 30, and an electrical element 40. The box 11 has a first accommodating cavity 11a and a second accommodating cavity 11b that are isolated from each other, and the battery cell 30 is accommodated within the first accommodating cavity 11a. The electrical element 40 is accommodated within the second accommodating cavity 11b, and electrically connected to the battery cell 30. The box 11 further has an access port 11c and an access cover 113. The access port 11c communicates the second accommodating cavity 11b with outside of the box 11, and the access cover 113 covers the access port 11c.

The first accommodating cavity 11a and the second accommodating cavity 11b are isolated from each other, so that the first accommodating cavity 11a and the second accommodating cavity 11b can each maintain a sealing state. If either one of them is opened or fails in sealing, the other one can still maintain the sealing state.

The battery cell 30 and the electrical element 40 are accommodated within the first accommodating cavity 11a and the second accommodating cavity 11b respectively. The battery cell 30 and the electrical element 40 can each maintain a sealing state. If either one of them fails in sealing or is opened manually, it will not prevent the other one from maintaining the sealing state.

The second accommodating cavity 11b may only accommodate a matching element, or a circuit board and other structures of the battery 10 and the electrical element 40 may be integrated together into the second accommodating cavity 11b.

The electrical element 40 is electrically connected to the battery cell 30 through a wire harness or a wire. Moreover, the electrical element 40 is further electrically connected to various electrical devices of the electrical apparatus, such as a motor controller 1b of a vehicle, a vehicle heater, and an air conditioning compressor, to rationally distribute electrical energy generated from the battery cell 30 to various electrical devices of the electrical apparatus, such as the motor controller 1b of the vehicle, the vehicle heater, and the air conditioning compressor.

The electrical element 40 may include any one or more of a relay, a fuse, a current sensor, and a precharged resistor. Of course, the electrical element 40 may further include other elements that need to be provided.

When the battery 10 is working, an operation, such as inspection or maintenance, needs to be performed on the electrical element 40 in a timely manner, and a failure rate of the matching element of the battery 10 is relatively high. When the electrical element 40 fails, the electrical element 40 also needs to be repaired. Therefore, arrangement of the access port 11c is conducive to performing the operation, such as repair or inspection, on the electrical element 40 within the second accommodating cavity 11b in a timely manner.

The access cover 113 covers the access port 11c, and when the electrical element 40 needs to be inspected or maintained, the access cover 113 can be opened, so that an operator performs an inspection or maintenance operation on the electrical element 40 through the access port 11c. When the electrical element 40 does not need to be inspected or maintained, the access cover 113 covers the access port 11c, to maintain sealing of the second accommodating cavity 11b, and reduce the risk of corroding the electrical element 40 by outside water and oxygen entering the second accommodating cavity 11b.

When an inspection or repair work is performed on the electrical element 40 within the second accommodating cavity 11b, the access cover 113 is opened, making the second accommodating cavity 11b communicate with the outside of the box 11. The maintenance staff can repair or inspect the electrical element 40 within the second accommodating cavity 11b through the access port 11c, during which only the electrical element 40 within the second accommodating cavity 11b is exposed to outside air, while the battery cell 30 within the first accommodating cavity 11a can still maintain the sealing state, and will not contact with the outside air, etc.

In the battery 10 provided in an embodiment of the present application, the first accommodating cavity 11a and the second accommodating cavity 11b are arranged to be isolated from each other, the battery cell 30 is accommodated within the first accommodating cavity 11a, and the electrical element 40 is accommodated within the second accommodating cavity 11b. The access port 11c of the box 11 communicates the second accommodating cavity 11b with the outside of the box 11, and the access cover 113 covers the access port 11c. During inspection of the electrical element 40 within the second accommodating cavity 11b, the access cover 113 is opened for inspection of the electrical element 40 through the access port 11c. During the inspection, since the first accommodating cavity 11a and the second accommodating cavity 11b are isolated from each other, the first accommodating cavity 11a can still maintain good sealing performance, and impurities such as the outside air can hardly enter the first accommodating cavity 11a through the access port 11c and the second accommodating cavity 11b, thereby reducing the risk of corroding the battery cell 30 within the first accommodating cavity 11a, which is conductive to improving the safety performance of the battery 10.

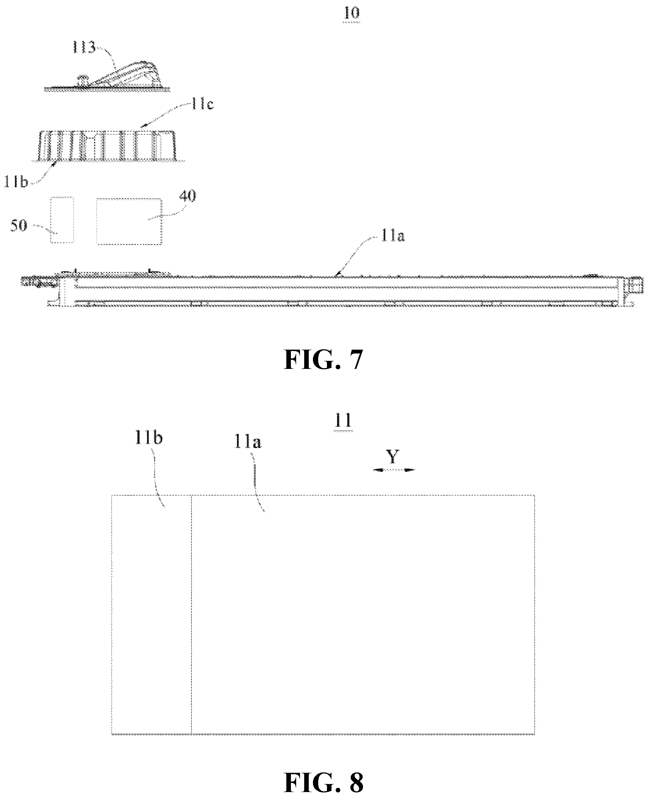

As shown in FIGS. 2 and 7, in some embodiments, the battery 10 further comprises a battery management system (BMS) unit 50, the battery management system unit 50 is accommodated within the second accommodating cavity 11b and electrically connected to the battery cell 30, and the battery management system unit 50 is configured to exchange information with the battery cell 30.

Specifically, the battery management system unit 50 may be integrated with a component, such as a circuit board, a sensor, a computing unit, and a processor. The battery management system unit 50 is electrically connected to the battery cell 30 of the battery 10 through a wire harness, to collect various working parameters of the battery cell 30, such as temperature, pressure, or current. Optionally, the battery management system unit 50 may further perform preliminary calculation or processing on collected data, to preliminarily determine a working status of the battery cell 30. Optionally, the battery management system unit 50 may further send a control signal to the battery cell 30, so that the battery cell 30 performs a next operation.

The battery management system unit 50 exchanges information with the battery cell 30, which may be that the battery cell 30 transmits its own relevant working parameters, such as operating temperature, pressure, or current, to the battery management system unit 50, or the battery management system unit 50 transmits the control signal to the relevant battery cell 30, so that the battery cell 30 can respond accordingly.

Optionally, the battery management system unit 50 may be further electrically connected to the matching element. As an example, the battery management system unit 50 is electrically connected to the electrical element 40 through a structure such as a wire harness, to collect information, such as the voltage, current, or temperature of the electrical element 40.

When the battery 10 is working, an operation, such as inspection or repair, also needs to be performed on the battery management system unit 50 in a timely manner. By integrating the battery management system unit 50 into the second accommodating cavity 11b, when the operation, such as inspection or repair, is performed on the battery management system unit 50, the sealing of the first accommodating cavity 11a can still be maintained, thereby further reducing the possibility that outside water and oxygen etc. enter the first accommodating cavity 11a and corrode the battery cell 30 during the inspection of the battery management system unit 50, and further improving work safety of the battery 10.

In some embodiments, the electrical element 40 comprises at least one of a relay, a fuse, and a sensor.

The relay and the fuse are used for over-current or over-temperature protection. Specifically, when the voltage or current provided by the battery 10 to the electrical apparatus is overloaded, the relay and the fuse break the circuit to protect the battery 10 or relevant electrical devices of the electrical apparatus. The sensor can be configured to collect information such as voltage or current in the circuit to determine whether a relevant component is in a normal working status. In this way, the electrical element 40 can be configured with relevant components as needed to ensure normal operation of the electrical element 40.

The first accommodating cavity 11a and the second accommodating cavity 11b may be arranged in any appropriate form, as long as the independence of their sealing performances is maintained.

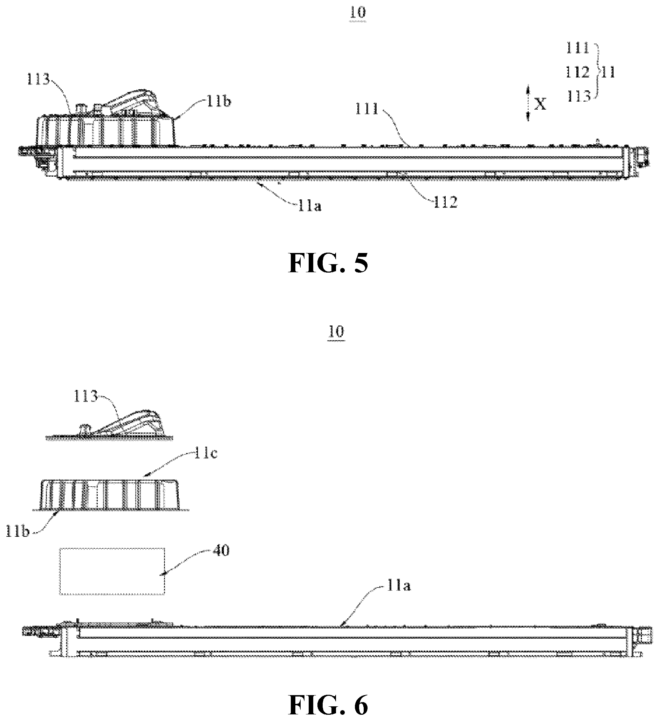

As shown in FIGS. 5 and 8, in some embodiments, the box 11 comprises a first box body portion 111 and a second box body portion 112, and the first box body portion 111 covers the second box body portion 112 along a first direction X, to form the first accommodating cavity 11a and the second accommodating cavity 11b. The second accommodating cavity 11b is located on a side of the first accommodating cavity 11a along a second direction Y, and is arranged in parallel with the first accommodating cavity 11a, and the first direction X intersects with the second direction Y.

As an example, the first direction X and the second direction Y may be perpendicular to each other.

The first box body portion 111 may be an integral structure, and covers the second box body portion 112, or there may be two first box body portions 111, which cover positions of the second box body portion 112 corresponding to the first accommodating cavity 11a and the second accommodating cavity 11b respectively.

The access port 11c may be arranged in the first box body portion 111, or the access port 11c may be arranged in the second box body portion 112, which may be arranged based on actual requirements.

The second accommodating cavity 11b is located on one side of the first accommodating cavity 11a along the second direction Y, and the second accommodating cavity 11b is arranged in parallel with the first accommodating cavity 11a. Sizes of the second accommodating cavity 11b and the first accommodating cavity 11a along a third direction Z may be identical, wherein the third direction Z may be perpendicular to the first direction X and the second direction Y. Then, an entirety of the box 11 of the battery 10 has a relatively regular shape along the first direction X and along the second direction Y, so that the first accommodating cavity 11a accommodates more battery cells 30, and is conducive to rational arrangement of the shape of the battery 10 and its position in the electrical apparatus as needed.

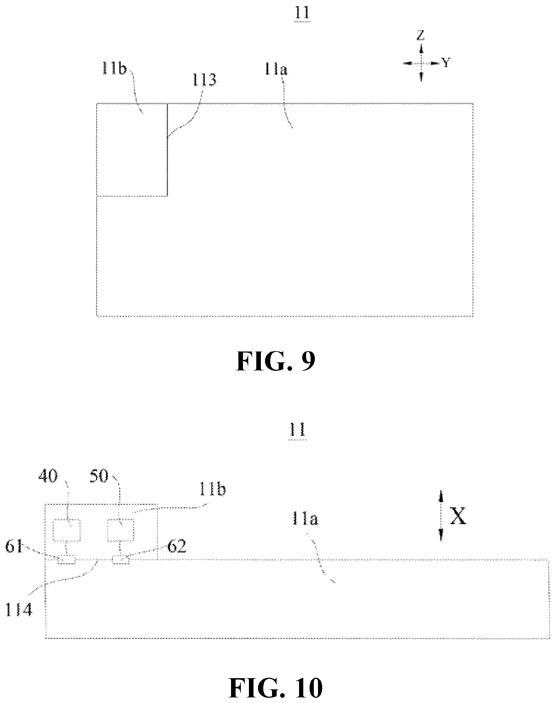

As shown in FIGS. 5 and 9, in some embodiments, the box 11 comprises a first box body portion 111 and a second box body portion 112, and the first box body portion 111 covers the second box body portion 112 along the first direction X, to form the first accommodating cavity 11a and the second accommodating cavity 11b. The second accommodating cavity 11b is located at an end of the box 11 along a second direction Y and a third direction Z, and the first direction X, the second direction Y, and the third direction Z intersect pairwise.

As an example, the first direction X, the second direction Y, and the third direction Z are pairwise perpendicular.

Optionally, the access port 11c may be formed in the first box body portion 111, or at a position of the second box body portion 112 corresponding to the second accommodating cavity 11b along the second direction Y and the third direction Z.

It is understandable that the volume of the second accommodating cavity 11b is relatively small, the second accommodating cavity 11b is arranged at the end of the first accommodating cavity 11a along the second direction Y and the third direction Z, the size of the second accommodating cavity 11b can be rationally distributed along the second direction Y and the third direction Z respectively based on the volume of the electrical element 40 within the second accommodating cavity 11b, and the first accommodating cavity 11a and the second accommodating cavity 11b have appropriate sizes at corresponding positions, so that the first accommodating cavity 11a accommodates more battery cells 30 by rational use of the space of the first accommodating cavity 11a, which is thus conductive to improving the energy density of the battery 10.

As shown in FIGS. 5, 6, 7, and 10, in some embodiments, the box 11 comprises a first box body portion 111 and a second box body portion 112, and the first box body portion 111 covers the second box body portion 112 along the first direction X, to form the first accommodating cavity 11a and the second accommodating cavity 11b. The second accommodating cavity 11b is located on one side of the first accommodating cavity 11a along the first direction X, an orthographic projection of the second accommodating cavity 11b along the first direction X is located within an orthographic projection of the first accommodating cavity 11a along the second direction Y, and the first direction X intersects with the second direction Y.

An angle between the first direction X and the second direction Y may be an acute angle or a right angle. As an example, the first direction X is perpendicular to the third direction Z.

The orthographic projection of the second accommodating cavity 11b along the first direction X is located within an orthographic projection of the first accommodating cavity 11a along the first direction X, and an edge of the orthographic projection of the second accommodating cavity 11b along the first direction X overlaps with an edge of the orthographic projection of the first accommodating cavity 11a along the first direction X, or an edge of the orthographic projection of the second accommodating cavity 11b along the first direction X is located within the orthographic projection of the first accommodating cavity 11a along the first direction X.

There may be two first box body portions 111, which cover positions of the first box body portion 111 corresponding to the first accommodating cavity 11a and the second accommodating cavity 11b respectively, to form the first accommodating cavity 11a and the second accommodating cavity 11b that are isolated from each other. In this case, the access port 11c may be formed in the first box body portion 111 corresponding to the second accommodating cavity 11b, or be formed in the second box body portion 112 corresponding to the second accommodating cavity 11b.

The second accommodating cavity 11b is located on one side of the first accommodating cavity 11a along the first direction X, the first accommodating cavity 11a can be regularly arranged along the second direction Y and the third direction Z, and the presence of the second accommodating cavity 11b will not affect the shape and size of the first accommodating cavity 11a along the second direction Y and the third direction Z. In this way, the size and shape of the first accommodating cavity 11a can be rationally arranged as needed.

In addition, the second accommodating cavity 11b is arranged on one side of the first accommodating cavity 11a along the first direction X, thereby reducing the space occupied by the entirety of the battery 10 along the second direction Y and the third direction Z. When the battery 10 is used in an electrical apparatus such as a vehicle, the position of the second accommodating cavity 11b can be rationally arranged based on spatial layout inside the vehicle, to make full use of the space of the vehicle, and reduce the space occupied by the battery 10 along the second direction Y and the third direction Z.

As shown in FIG. 10, in some embodiments, the box 11 has a partition 114, and the partition 114 is configured to isolate the first accommodating cavity 11a from the second accommodating cavity 11b. The battery 10 further comprises a first connecting terminal 61, the first connecting terminal 61 is arranged on the partition 114, and the first connecting terminal 61 is configured to electrically connect the battery cell 30 to the electrical element 40.

A matching element within the second accommodating cavity 11b needs to be electrically connected to the battery cell 30 within the first accommodating cavity 11a, and respective sealing of the second accommodating cavity 11b and the first accommodating cavity 11a needs to be maintained, so that a connecting terminal may be provided on the partition 114 that isolates the first accommodating cavity 11a from the second accommodating cavity 11b, the electrical element 40 may be connected to one end of the first connecting terminal 61 close to the second accommodating cavity 11b through a wire harness, and the battery cell 30 may be connected to one end of the first connecting terminal 61 close to the first accommodating cavity 11a through a Flexible Printed Circuit (FPC).

The structural form of the first connecting terminal 61 is not limited, and may be any structure, such as a connector capable of connecting to a wire harness.

Therefore, the first connecting terminal 61 is provided on the partition 114 between the first accommodating cavity 11a and the second accommodating cavity 11b, which is conductive to electrical connection between the battery cell 30 within the first accommodating cavity 11a and the electrical element 40 within the second accommodating cavity 11b on the premise that the first accommodating cavity 11a and the second accommodating cavity 11b are isolated from each other.

Further referring to FIG. 10, in some embodiments, the battery 10 further comprises a battery management system unit 50, the battery management system unit 50 is accommodated within the second accommodating cavity 11b, and is electrically connected to the battery cell 30, and the battery management system unit 50 is configured to exchange information with the battery cell 30. The battery 10 further comprises a second connecting terminal 62, the second connecting terminal 62 is arranged on the partition 114, and the second connecting terminal 62 is configured to electrically connect the battery cell 30 to the battery management system unit 50.

The battery management system unit 50 within the second accommodating cavity 11b needs to be electrically connected to the battery cell 30 within the first accommodating cavity 11a, and respective sealing of the first accommodating cavity 11a and the second accommodating cavity 11b also needs to maintained. Therefore, the second connecting terminal 62 is arranged, the battery management system unit 50 may be connected to one end of the second connecting terminal 62 close to the second accommodating cavity 11b through a wire harness, and the battery cell 30 is connected to one end of the second connecting terminal 62 close to the first accommodating cavity 11a through a wire harness such as a flexible printed circuit.

Therefore, arrangement of the second connecting terminal 62 is conductive to electrical connection between the battery cell 30 within the first accommodating cavity 11a and the battery management system unit 50 within the second accommodating cavity 11b on the premise that the first accommodating cavity 11a and the second accommodating cavity 11b are isolated from each other.

The electrical apparatus provided according to an embodiment of the present application comprises the battery 10 provided in any one of the above embodiments, and the battery 10 is configured to provide electrical energy.

Because of using the battery 10 provided in any one of the above embodiments, the electrical apparatus provided according to an embodiment of the present application has same technical effects, and will not be repeated here.

The inventors found through further researches that the access port 11c in the related art is usually provided at the bottom of an electrical apparatus such as a vehicle. Therefore, when the electrical element 40 needs to be repaired, the entire vehicle needs to be elevated for repair. For the case where the vehicle cannot be elevated in the wild or in some particular environments, it is difficult to quickly repair the electrical element 40.

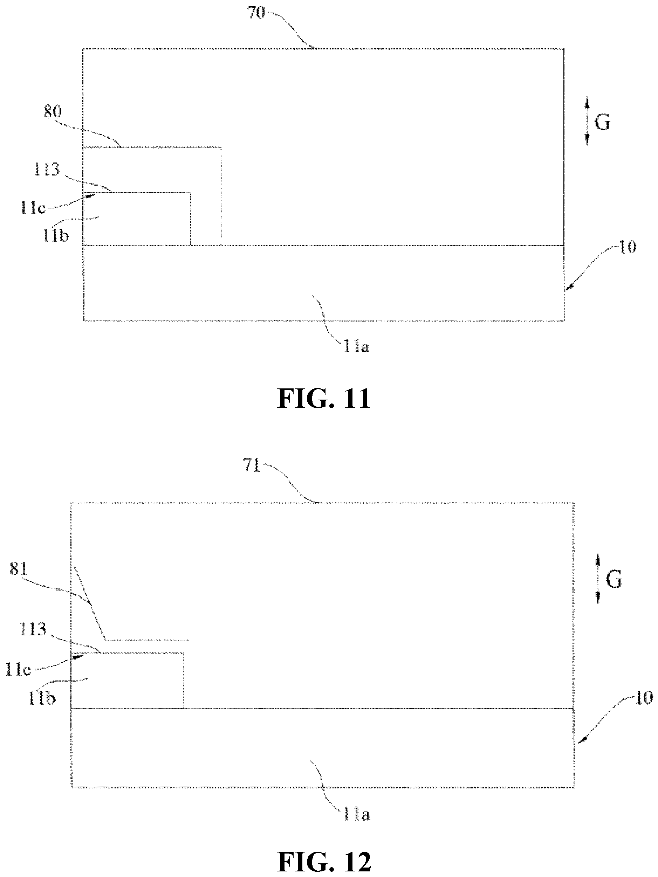

As shown in FIG. 11, in some embodiments, the electrical apparatus comprises a compartment 70, the second accommodating cavity 11b is located below the compartment 70 along a gravity direction G, and the access cover 113 is adjacent to the compartment 70 and is arranged towards one side of the compartment 70.

The electrical apparatus may be a vehicle, and the compartment 70 may be configured to carry passengers, or the compartment 70 may be configured to carry cargoes. In this way, there is enough space within the compartment 70 for accommodating a maintenance operator.

The access cover 113 is arranged towards one side of the compartment 70, and the access cover 113 may be arranged to be located inside the compartment 70. In this way, the operator can open, within the compartment 70, the access cover 113 to perform a repair operation on the electrical element 40 within the second accommodating cavity 11b. Or, the access cover 113 is located directly below the compartment 70. In this way, the operator can open a part of the compartment 70, then open the access cover 113, and can still perform, within the compartment 70, a repair operation on the electrical element 40 within the second accommodating cavity 11b.

Therefore, the second accommodating cavity 11b is arranged to be located below the compartment 70 along the gravity direction G, and the access cover 113 is adjacent to the compartment 701 and is arranged towards one side of the compartment 70, which is convenient for the operator to operate, within the compartment 70, the electrical element 40 within the second accommodating cavity 11b, and is conducive to reducing the difficulty in the inspection of the electrical element 40 within the second accommodating cavity 11b.

In some embodiments, the second accommodating cavity 11b is located between the compartment 70 and the first accommodating cavity 11a along the gravity direction G.

Optionally, the second accommodating cavity 11b may be located inside the space enclosed by the compartment 70, or the second accommodating cavity 11b may be located outside the compartment 70.

In this way, the second accommodating cavity 11b and the first accommodating cavity 11a are arranged to be distributed along the gravity direction G, which is conducive to arranging the first accommodating cavity 11a and the second accommodating cavity 11b by rational use of the space of the electrical apparatus along the gravity direction G, thereby improving the compactness of each structure within the electrical apparatus.

In some embodiments, at least a part of the second accommodating cavity 11b is located inside the compartment 70.

It is usually necessary to arrange some structures such as seats 81 and shelves inside the compartment 70, which can use the space failing to be used inside the compartment 70 to accommodate at least a part of the second accommodating space, thereby conveniently opening the access cover 113 within the compartment 70 while improving the space utilization rate within the compartment 70, and inspecting the electrical element 40 within the second accommodating cavity 11b, that is, improving the convenience of inspecting the electrical element 40 within the second accommodating space.

In some embodiments, further referring to FIG. 11, the electrical apparatus comprises a movable member 80, the movable member 80 is located above the second accommodating cavity 11b, and is arranged to cover the access cover 113, and the movable member 80 is movably installed in the compartment 70.

Optionally, the movable member 80 may be a structure such as a shelf or a seat 81 within the compartment 70, and the movable member 80 may be a structure separated from the compartment 70. As an example, the movable member 80 is a part of the bottom plate of the compartment 70. Or, the movable member 80 is merely a component movable relative to the compartment 70, so that the movable member 80 can be removed, when necessary, thus providing enough operating space to inspect the electrical element 40 within the second accommodating cavity 11b.

The movable member 80 is movably installed in the compartment 70, and the movable member 80 may be detachably installed in the compartment 70, or the movable member 80 may slide relative to the compartment 70.

Therefore, the movable member 80 is arranged, and the movable member 80 is located above a second accommodating member. When the electrical element 40 is inspected, the movable member 80 can be moved, so that the electrical element 40 can be conveniently inspected. In this way, it is conducive to further improving the convenience of the inspection operation on the electrical element 40 within the second accommodating cavity 11b.

As shown in FIG. 11, in some embodiments, the movable member 80 comprises a seat 81, and the seat 81 is movably installed in the compartment 70.

The compartment 70 may comprise a passenger compartment for carrying passengers, or a cab 71 for carrying a driver. The seat 81 may be installed in the passenger compartment, or the seat 81 may be installed within the cab 71.

The seat 81 is movably installed in the compartment 70, and the seat 81 may be detachably connected to the compartment 70, or the seat 81 can slide relative to the compartment 70, to avoid the space where the access cover 113 is located, and reserve enough space for the repair operation of the electrical element 40.

Therefore, the access cover 113 is located below the seat 81 along the gravity direction G, which can use the space under the seat 81 to accommodate at least a part of the second accommodating cavity 11b, which is conducive to rational use of the space within the compartment 70. Moreover, the repair operation on the electrical element 40, when necessary, can be conveniently performed by removing the seat 81, which is conducive to improving the convenience of the repair operation on the electrical element 40.

In some embodiments, the compartment 70 comprises a cab 71, and the seat 81 is installed within the cab 71.

In some vehicles, such as a bus, the seat 81 within the cab 71 is higher than the seats 81 in the passenger compartment, and there is more space under the seat 81 within the cab 71 to accommodate at least a part of the second accommodating cavity 11b. In an engineering vehicle such as a truck and a tractor, only the cab 71 is provided with a seat 81, and the battery 10 is usually located below the cab 71 of the vehicle, so that the battery 10 is connected to a structure such as an actuator.

Therefore, the second accommodating cavity 11b is arranged below the seat 81 within the cab 71, which is convenient to rationally configure positions of the battery 10 and the second accommodating cavity 11b according to the arrangement of the battery 10 in the vehicle while ensuring the convenience of repair of the electrical element 40 within the second accommodating cavity 11b.

In some embodiments, the second accommodating cavity 11b is located below the seat 81 within the cab 71 along the gravity direction G, and the second accommodating cavity 11b is located within the cab 71. The first accommodating cavity 11a is located below the second accommodating cavity 11b along the gravity direction G, sizes of the second accommodating cavity 11b along the second direction Y and along the third direction Z are each smaller than the size of the first accommodating cavity 11a, and the second direction Y, the third direction Z and the gravity direction G are pairwise perpendicular, that is, the second accommodating cavity 11b is arranged to protrude from a part of the first accommodating cavity 11a along the gravity direction G. The access port 11c is located at the top of the second accommodating cavity 11b along the gravity direction G, and the access cover 113 covers the access port 11c.

In the electrical apparatus provided in an embodiment of the present application, the second accommodating cavity 11b is arranged to be located within the cab 71 and below the seat 81 along the gravity direction G, which is conducive to rational use of the space within the cab 71, reduces the possibility that the battery 10 occupies too much space of the electrical apparatus along the gravity direction G, and is conducive to inspecting the electrical element 40 within the cab 71.

It should be noted that the embodiments in the present application and the features in the embodiments may be combined with each other in case of no conflict.

Finally, it should be noted that, the above embodiments are merely used for describing the technical solution of the present application, instead of limiting the present application; although the present application is described in detail with reference to the foregoing embodiments, persons of ordinary skill in the art should understand that they can still make modifications on the technical solution recorded in the above embodiments, or perform equivalent replacements on a part of technical features thereof, these modifications or replacements are not intended to make the essences of the corresponding technical solutions depart from the spirit and scope of the technical solutions of the embodiments of the present application.

## Claims

1. A battery (10), comprising:
a box (11) having a first accommodating cavity (11a) and a second accommodating cavity (l lb) that are isolated from each other;
a battery cell (30) accommodated within the first accommodating cavity (11a); and
an electrical element (40) accommodated within the second accommodating cavity (11b) and electrically connected to the battery cell (30);
wherein the box (11) further has an access port and an access cover (113), the access port communicates the second accommodating cavity (11b) with outside of the box (11), and the access cover (113) covers the access port.

2. The battery (10) according to claim 1, wherein the battery (10) further comprises a battery management system unit (50), the battery management system unit (50) is accommodated within the second accommodating cavity (11b), and is electrically connected to the battery cell (30), and the battery management system unit (50) is configured to exchange information with the battery cell (30).

3. The battery (10) according to claim 1 or 2, wherein the electrical element (40) comprises at least one of a relay, a fuse, and a sensor.

4. The battery (10) according to any one of claims 1-3, wherein the box (11) comprises a first box body portion (111) and a second box body portion (112), the first box body portion (111) covers the second box body portion (112) along a first direction (X) to form the first accommodating cavity (11a) and the second accommodating cavity (11b); and
the second accommodating cavity (11b) is located on a side of the first accommodating cavity (11a) along a second direction (Y), and is arranged in parallel with the first accommodating cavity (11a), and the first direction (X) intersects with the second direction (Y).

5. The battery (10) according to any one of claims 1-3, wherein the box (11) comprises a first box body portion (111) and a second box body portion (112), the first box body portion (111) covers the second box body portion (112) along a first direction (X) to form the first accommodating cavity (11a) and the second accommodating cavity (11b); and
the second accommodating cavity (11b) is located at an end of the box (11) along a second direction (Y) and a third direction (Z), and the first direction (X), the second direction (Y), and the third direction (Z) intersect pairwise.

6. The battery (10) according to any one of claims 1-3, wherein the box (11) comprises a first box body portion (111) and a second box body portion (112), the first box body portion (111) covers the second box body portion (112) along a first direction (X) to form the first accommodating cavity (11a) and the second accommodating cavity (11b); and
the second accommodating cavity (11b) is located on one side of the first accommodating cavity (11a) along the first direction (X), an orthographic projection of the second accommodating cavity (11b) along the first direction (X) is located within an orthographic projection of the first accommodating cavity (11a) along the first direction (X), and the first direction (X) intersects with the second direction (Y).

7. The battery (10) according to any one of claims 1-6, wherein the box (11) has a partition (114), the partition (114) is configured to isolate the first accommodating cavity (11a) from the second accommodating cavity (11b); and
the battery (10) further comprises a first connecting terminal (61), the first connecting terminal (61) is arranged on the partition (114), and the first connecting terminal (61) is configured to electrically connect the battery cell (30) to the electrical element (40).

8. The battery (10) according to claim 7, wherein the battery (10) further comprises a battery management system unit (50), the battery management system unit (50) is accommodated within the second accommodating cavity (11b), and is electrically connected to the battery cell (30), the battery management system unit (50) is configured to exchange information with the battery cell (30);
the battery (10) further comprises a second connecting terminal (62), the second connecting terminal (62) is arranged on the partition (114), and the second connecting terminal (62) is configured to electrically connect the battery cell (30) to the battery management system unit (50).

9. An electrical apparatus, comprising the battery (10) according to any one of claims 1-8, wherein the battery (10) is configured to provide electrical energy.

10. The electrical apparatus according to claim 9, wherein the electrical apparatus comprises a compartment (70), the second accommodating cavity (11b) is located below the compartment (70) along a gravity direction (G), and the access cover (113) is adjacent to the compartment (70) and is arranged towards one side of the compartment (70).

11. The electrical apparatus according to claim 10, wherein the second accommodating cavity (11b) is located between the compartment (70) and the first accommodating cavity (11a) along the gravity direction (G).

12. The electrical apparatus according to claim 11, wherein at least a part of the second accommodating cavity (11b) is arranged inside the compartment (70).

13. The electrical apparatus according to any one of claims 10-12, wherein the electrical apparatus comprises a movable member (80), the movable member (80) is located above the second accommodating cavity (11b), and is arranged to cover the access cover (113), and the movable member (80) is movably installed in the compartment (70).

14. The electrical apparatus according to claim 13, wherein the movable member (80) comprises a seat (81), and the seat (81) is movably installed in the compartment (70).

15. The electrical apparatus according to claim 14, wherein the compartment (70) comprises a cab (71), and the seat (81) is installed within the cab (71).
